# EUROPEAN PATENT SPECIFICATION

(11) **EP 3 114 599 B1**
(45) Date of publication and mention of the grant of the patent: **24.01.2018**
(21) Application number: 15713387.7
(22) Date of filing: 03.03.2015
(51) Int. Cl.: G06Q 20/32, G06Q 20/38, G06K 19/06, H04W 12/02, G06F 21/14, H04L 9/00, G06F 21/60

(54) **SECURE MOBILE DEVICE TRANSACTIONS**
SICHERE MOBILVORRICHTUNGSTRANSAKTIONEN
TRANSACTIONS PAR DISPOSITIF MOBILE SÉCURISÉES

(30) Priority: 03.03.2014 GB 201403728
(43) Date of publication of application: 11.01.2017
(60) Divisional application: 17206241.6
(73) Proprietor: Mastercard International, Inc., Purchase, NY 10577 (US); Mastercard Ireland Limited, Dublin 18 (IE)
(72) Inventor: RADU, Cristian, B-1320 Beauvechain (BE); COLLINGE, Mehdi, 1420 Braine-l'Alleud (BE); GAITANOS, John, London N21 3JU (GB)
(74) Representative: Lawrence, Richard Anthony
(86) International application number: PCT/EP2015/054382
(87) International publication number: WO 2015/132244

(56) References cited:
- WO-A1-2013/151797
- GAUTHIER VAN DAMME ET AL: "A PKI-Based Mobile Banking Demonstrator", 15 September 2011 (2011-09-15), PUBLIC KEY INFRASTRUCTURES, SERVICES AND APPLICATIONS, SPRINGER BERLIN HEIDELBERG, BERLIN, HEIDELBERG, PAGE(S) 147 - 158, XP019177259, ISBN: 978-3-642-29803-5 the whole document
- Brecht Wyseur: "WHITE-BOX CRYPTOGRAPHY: HIDING KEYS IN SOFTWARE", , 15 February 2012 (2012-02-15), XP055080943, Retrieved from the Internet: URL:http://whiteboxcrypto.com/files/2012_m isc.pdf [retrieved on 2013-09-25]

## Description

### Field of Invention

The present invention relates to secure mobile device transactions. More specifically, it relates to methods and apparatus allowing a mobile device to operate as a payment device securely without a requirement for secure hardware.

### Background of Invention

Where mobile devices (such as mobile telephone handsets, tablets and laptop computers) need to perform operations or store data that could compromise user (or other) assets if viewed by malicious third parties, it is normal practice for a processor performing these operations or a memory storing this data to be located in a secure element (SE) within the mobile device. The secure element is typically both physically and logically protected against subversion by a malicious third party. Cryptographic software and cryptographic keys used by a mobile device will typically be kept in a secure element - a mobile telephone SIM card is an example of a secure element, and an SE is also typically used for local wireless communication under NFC protocols.

Transactions, particularly financial transactions, involve authentication and data which is sensitive both to users and other parties. Increasingly, a mobile computing device may be used as a payment device. Such a payment device is effectively a new form of payment card - payment cards such as credit cards and debit cards are very widely used for all forms of financial transaction. The use of payment cards has evolved significantly with technological developments over recent years. Many payments are made at a retail location, typically with a physical transaction card interacting with a point of sale (POS) terminal to perform a transaction. These transaction cards may interact with a POS by swiping through a magnetic stripe reader, or for a "chip card" or "smart card" by direct contact with a smart card reader (under standard ISO/IEC 7816) or by contactless interaction through local short range wireless communication (under standard ISO/IEC 14443).

For a contactless card, the account number can be read automatically from the card by a POS terminal, generally using a short range wireless technology such as Radio Frequency Identification (RFID) - this approach is generally referred to as "contactless" or "proximity" payment. This is typically enabled by embedding of an RFID tag in a card body together with a suitable antenna to allow transmission and receipt of wireless signals - the transmissions may be powered by a radio frequency interrogation signal emitted by a proximity reader in the POS terminal. For an effective connection to be made, the payment card may need to be brought into very close proximity to the proximity reader - this has security benefits and prevents confusion if there are multiple enabled payment cards in the general vicinity of the proximity reader, as will typically be the case in a retail establishment for example. This may be achieved by tapping the antenna of the payment card against the proximity reader of the POS terminal.

The present applicants have developed a proprietary system, known as *PayPass*®*,* for performing contactless transactions. The present applicants have also appreciated that it would be possible to use a computing device such as a mobile telephone as a proxy for a payment card. They have also developed a mobile payment application, Mobile *PayPass*_{TM}, which can be downloaded to a mobile telephone handset to act as a proxy for a payment card using Near Field Communication (NFC) technology standards, which are built in to the majority of current mobile phones. NFC is a development upon RFID, and NFC-enabled devices are able to operate in the same manner as RFID devices - though an NFC-device is active rather than passive, as it is powered by the mobile phone battery rather than relying on inductive pickup from a reader device. Using Mobile *PayPass*_{TM}*,* a user can conduct tapping based transactions with a proximity reader, as well as perform account management operations over an appropriate network interface (cellular, local wireless network) in an online banking interface with the user's account provider.

As is indicated above, a transaction application such as a contactless payment application will use sensitive data which should not be exposed to a malicious third party. For this reason, such transaction applications will typically use a secure element such as a mobile telephone SIM card or a secure element built in to a mobile telephone - this may be provided in a manufacturer's implementation of NFC protocols in the mobile telephone handset, for example. However, this approach is reliant on cooperation of the Mobile Network Operator (MNO) for a SIM card or an original equipment manufacturer for an SE in a mobile telephone handset. Even if such cooperation is available, the diversity of SIMs and mobile telephone handsets will make it very difficult for a consistent approach to be used, meaning that significant user customisation may be required in order to install and run a transaction application effectively. This will deter users from adopting such transaction applications.

WO 2013/151797 is an earlier application of the present applicant describing the use of single use keys to provision mobile transaction applications with payment credentials where the computing environment of the mobile device does not comprise a secure element. In Van Damme et al, "A PKI-Based Mobile Banking Demonstrator", in "Public Key Infrastructures, Services and Applications", pp 147-158, Springer, September 2011, it is suggested that white-box cryptographic techniques could be used in mobile banking applications. Wyseur, "White-Box Cryptography: Hiding Keys in Software" describes a variety of white-box cryptographic techniques.

### Summary of Invention

In a first aspect, the invention provides a mobile computing device having a processor and a memory, wherein the processor is programmed with a mobile transaction application, wherein: the memory comprises a local database to hold data items for use by the mobile transaction application, wherein an entry in the local database comprises an index, an encrypted parameter for use by the mobile transaction algorithm, and an additional parameter associated with the encryption/decryption step for the encrypted parameter for that entry; and
wherein the mobile transaction application is adapted to encrypt data items for storage in the local database and to decrypt data items stored in the local database using white-box cryptographic techniques.

This approach allows the use of a generic transaction application that is not personalised to a user without compromising user or issuer security. This enables the user experience to be essentially similar to that provided with other mobile applications.

In one embodiment type, the mobile transaction application is adapted to use static white-box cryptography and uses a key derivation algorithm in encryption and storage of data in the local encrypted database. The additional parameter may then be an application sequence counter to indicate a transaction in which an operation associated with the entry was performed.

In another embodiment type, the mobile transaction application is adapted to use dynamic white-box cryptography and uses a key transportation algorithm in encryption and storage of data in the local encrypted database. In this case, the additional parameter may then be an encrypted key for that entry. In certain embodiments of this type, the mobile transaction application communicates with a server adapted to secure one or more parameters used by the mobile transaction application.

In embodiments, the mobile transaction application and the local database are protected by software obfuscation.

Preferably, the mobile transaction application is downloaded to the mobile computing device without customisation to the mobile computing device or its user. In some cases, on installation or initialization, the mobile transaction application may then be customised to the mobile computing device or its user.

In particular embodiments, the mobile computing device is adapted to act as a payment device and wherein the mobile transaction application is a payment application. The mobile computing device may be adapted to emulate a contactless payment card.

In embodiments, the mobile computing device is or comprises a mobile telephone.

In a further aspect, the disclosure provides a method of operating a mobile transaction application at a mobile computing device, wherein the mobile computing device comprises a processor adapted to execute the mobile transaction application and a memory comprising a local database to hold data items for use by the mobile transaction application, the method comprising: identifying one or more data items for storage in or retrieval from the local database; and either encrypt the one or more data items for storage in the local database using white-box cryptographic techniques, or decrypt the one or more data items stored in the local database using white-box cryptographic techniques; wherein an entry in the local database comprises an index, an encrypted parameter for use by the mobile transaction algorithm, and an additional parameter associated with the encryption/decryption step for the encrypted parameter for that entry.

### Brief Description of Figures

Embodiments of the invention will now be described, by way of example, with reference to the accompanying Figures, of which:

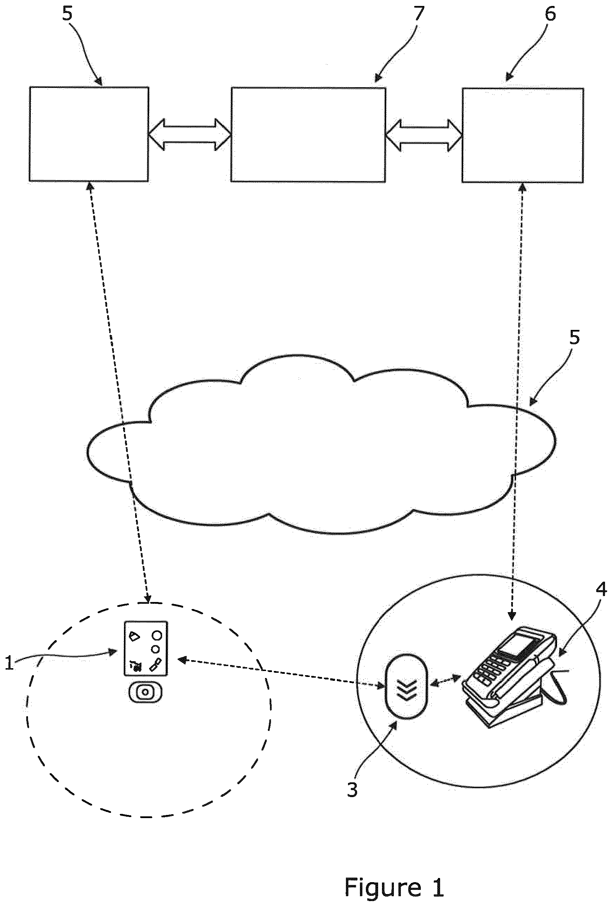

Figure 1 shows elements of a payment infrastructure in which embodiments of the invention may be used;
Figure 2 shows a mobile phone adapted for use as an embodiment of the invention;
Figures 3A to 3D illustrate the following models: black-box, white-box, white-box with white-box cryptography and grey box;
Figure 4 illustrates a mobile transaction application with an encrypted local database according to embodiments of the invention;
Figures 5A and 5B compare static and dynamic white-box cryptographic approaches;
Figure 6 illustrates a design appropriate for use of a local encrypted database when a personalised secure element is used in an arrangement which is not an embodiment of the invention but which is useful to explain embodiments of the invention;
Figure 7 shows a first transformation to adapt the design of Figure 6 to a static white-box implementation;
Figure 8 shows a second transformation to adapt the design of Figure 6 to a static white-box implementation;
Figure 9 shows interaction between a mobile transaction application and a local encrypted database according to an embodiment of the invention;
Figure 10 shows a dynamic white-box construct for use in a further embodiment of the invention;
Figure 11 shows a mobile transaction application with an encrypted local database according to embodiments of the invention implementing the dynamic white-box construct of Figure 10;
Figure 12 shows operative principles for first and second server supported embodiments illustrated in Figures 13 and 14 respectively; and
Figure 15 shows a further server supported embodiment, with Figure 16 illustrating how this is employed in operation of a mobile transaction application in accordance with an embodiment of the invention.

### Description of Specific Embodiments

Specific embodiments of the invention will be described below with reference to the Figures. The embodiments described below relate to a mobile phone used as a payment device for contactless payments with POI (point of interaction) terminals (such as a POS - point of sale - terminal) under the EMV protocols indicated above, but as is discussed further below, further embodiments may be used in other transaction systems and contexts.

A user (not shown) is provided with a payment device in the form of a mobile computing device - this is shown here as mobile phone 1, but may for example be a laptop computer or a tablet. The mobile phone 1 is adapted to act as a proxy for a physical payment card (or may be used for a virtual payment card with no direct physical counterpart). The mobile phone 1 equipped with means to communicate with other elements of a payment infrastructure, in that it comprises antennae and associated hardware and software to enable communication by NFC and associated contactless card protocols such as those defined under ISO/IEC 14443.

Other computer equipment in the infrastructure is typically fixed, such as point of interaction (POI) terminals 4, of which the example shown is a point-of-sale (POS) terminal used by a merchant interacting with the user. The POS terminal 4 interacts with the mobile phone 1 through contactless card reader 3. The merchant POS terminal 4 is typically connected or connectable to an acquiring bank 6 or other system in a secure way (either through a dedicated channel or through a secure communication mechanism over a public or insecure channel). There may also be a mechanism to allow connection between the mobile phone 1 (or another user computing device) and a card issuing bank 5 or system associated with the user. A banking infrastructure 7 will also connect the card issuer 5 and the acquiring bank 6, allowing transactions to be carried out between them. This banking infrastructure will typically be provided by a transaction card provider who provides transaction card services to the card issuing bank 5. The banking infrastructure 7 provides authorization at the time of purchase, clearing of the transaction and reconciliation typically within the same working day, and settlement of payments shortly after that. The banking infrastructure 7 comprises a plurality of switches, servers and databases, and is not described further here as the details of the banking infrastructure used are not necessary for understanding how embodiments of the invention function and may be implemented.

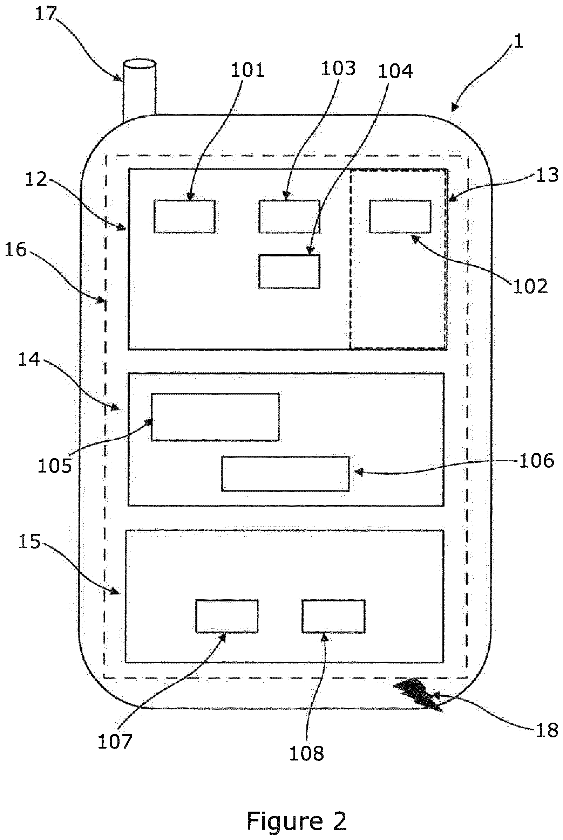

Figure 2 shows schematically relevant parts of a representative hardware and software architecture for a mobile computing device suitable for implementing an embodiment of the invention. In the example shown, each mobile computing device is a mobile cellular telecommunications handset ("mobile phone" or "mobile device") - in other embodiments, the computing device may be another type of computing device such as a laptop computer or a tablet and the computing device need not have cellular telecommunications capabilities.

Mobile phone 1 comprises an application processor 12, one or more memories 13 associated with the application processor, a SIM or USIM 14 itself comprising both processing and memory capabilities and a NFC controller 15. The mobile phone also has a display 16 (shown as an overlay to the schematically represented computing elements of the device), providing in this example a touchscreen user interface. The mobile phone is equipped with wireless telecommunications apparatus 17 for communication with a wireless telecommunications network and local wireless communication apparatus 18 for interaction by NFC.

In the arrangement shown, the application processor 12 and associated memories 13 comprise (shown within the processor space, but with code and data stored within the memories) a mobile payment application 101 - explicitly shown within the memories 13 is encrypted local database 102. It will also contain other applications normally needed by such a device, such as a browser 103 and a modem 104. The SIM/USIM 4 will comprise a security domain 105 adapted to support cryptographic actions and an NFC application 106 which interfaces with the NFC controller 15, which has interfaces 107 to NFC devices and tags - a contactless front end 108 may be provided here, interacting with a cardlet associated with the payment application 1. The SIM/USIM 14 will typically be physically and logically protected against subversion. It should be noted that the payment application 101 and the encrypted local database 102 are both located within the application processor 12 and associated memories 13 space - neither rely on the security domain 105 provided within the SIM/USIM 104 or on any other security domain protected by secure hardware.

The requirements for contactless card transactions and associated protocols are described in more detail in the EMV Contactless Specifications for Payment Systems, available from https://www.emvco.com/specifications.aspx?id=21, to which the skilled person is directed. These will not be discussed in further detail here, as the specific protocols used are not relevant to the implementation of embodiments of the invention. For these purposes, it is sufficient to note that the mobile payment application 101 and the encrypted local database 102 contain data that is extremely sensitive to the user, and may also be highly sensitive to other parties such as the card issuer 5. It is therefore necessary that the mobile payment application 101 and the encrypted local database 102 exist, and operate, in such a way that this sensitive data is not exposed to malicious third parties. As the mobile payment application 101 and the encrypted local database 102 are located in the memories 13 associated with the main processor 12, this provides a significant technical challenge as the normal technical solution of keeping such sensitive data in a physically protected region (such as SIM/USIM 14) is not available.

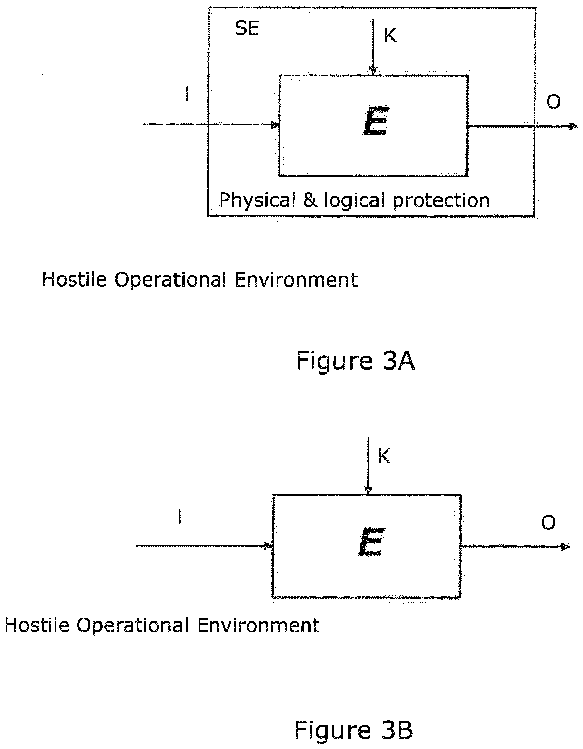

The significance of the availability of a secure operational environment, and the operational solution achieved in embodiments of the invention, is shown in Figures 3A to 3D. Figure 3A shows a conventional arrangements in which a process E runs within a secure element SE, with sensitive material such as key K also available only within the SE. The SE lies within but protected from a "hostile" (i.e. unprotected) operating environment that it is assumed can be observed by malicious third parties - all that can be observed by these third parties are the inputs I and outputs E from process E, which are either not sensitive or if sensitive, typically encrypted by process E for decryption by an intended recipient (such as the merchant POS terminal in a transaction). The SE here can be considered a "black box" from the point of view of a third party, and this can be termed a black-box model.

Where process E is (or is a part of) a mobile payment application 101, it will be necessary for the process to be provisioned with one or more keys by the card issuer or on the card issuer's behalf to allow the user to be authenticated to the card issuer as the legitimate cardholder. In this conventional model, the card issuer may use a card issuer key K_{ISS} to derive a discrete device key K_{D} for each mobile computing device, for example by using the mobile fingerprint along with K_{ISS} as inputs to a key derivation algorithm. In a transaction, the device key K_{D} may then be used to generate a session key K_{S} for use in that transaction (or for part of a transaction) using a further key derivation process, for example by using the application sequence counter (ASC) of the mobile application as an input as well as K_{D}. This approach protects K_{ISS} as this key does not need to be transmitted anywhere by the issuer, provides a discrete device key K_{D} for each mobile computing device which is protected within the secure element, and in transaction operations uses a session key K_{S} which if discovered by a malicious third party should not affect future transactions.

While this model appears satisfactory for the purpose of security, it has significant practical disadvantages. In a mobile telephone, the SIM/USIM provides one secure element, but this is under the control of the mobile network operator (MNO) - to use this SIM/USIM for any additional purpose will require specific agreement between the payment infrastructure provider and the MNO, and given the sensitivity of information already present on the SIM/USIM, setup of any application using the SIM/USIM as a resource will be complex and will need to reassure the MNO that the integrity of the SIM/USIM is not compromised. This is a major barrier to user acceptance - a user will typically wish to be able to install a generic application from an application store, and then to be able to use that application in the same way as any other mobile application, with at most a limited initialization step on installation. Another approach would be to persuade original equipment manufacturers (OEMs) to provide an additional secure element in the mobile telephone directly - in effect, an additional memory that is also secure - but this increases mobile telephone cost without significantly affecting the ease of installation or use of a mobile application.

Figure 3B shows the model that exists when the SE is removed - not only inputs I and outputs O are visible to third parties, but also keys K. Intermediate stages in the execution of E are also visible - this means that if not already known, process E can typically be reverse engineered to leave every part of this process known. This is known as a "white box" model - in effect, for the process shown there is no apparent security at all. This approach is however cheap to implement, and allows a mobile application to operate in unprotected main memory in the same manner as other mobile applications. The present inventors have thus determined that it would be desirable to allow operation in this paradigm provided that there is a way to obtain sufficient security for practical operation.

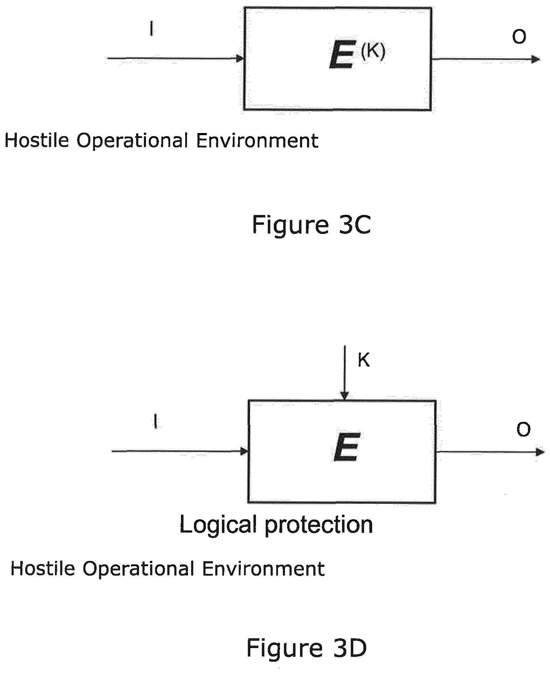

Figure 3C shows one way in which security within this model can be enhanced. In this approach the inputs I and outputs O are still available for inspection in the main operating environment, but keys K are subsumed within process E in such a way that neither are susceptible to effective interception by an attacker. This can be done by using "white-box cryptography" - general principles of white-box cryptography are described, for example, in "On White-Box Cryptography" by Marc Joye in A. Elçi, S.B. Ors, and B. Preneel, Eds, "Security of Information and Networks", pp. 7-12, Trafford Publishing, 2008, and commercial white-box implementations of widely used cryptographic algorithms are available. The goal of white-box cryptography (WBC) is to implement a cryptographic algorithm *E*(*K*) in software in such a way that cryptographic assets - keys and secret equivalent transformations -- remain secure even when the attacker has access to the software.

There are two basic approaches to white-box cryptography: static white-box (SWB) and dynamic white-box (DWB) cryptography. These will be described further below, and as noted further below, both can be used to provide embodiments of the present invention.

An intermediate model is shown in Figure 3D - in this approach, there is again no secure element present, but the sensitive process E and keys K are maintained within a logically protected layer, with protection provided in software by techniques such as software obfuscation. This can be termed a grey-box (GB) model. Such a technique will be effective to protect algorithms E and keys K, but only for a short period of time. Consequently the GB model could be used to protect a session key K_{S} and its use in execution of process E, but would not be strong enough for long term protection of a device key K_{D}, and would be clearly unsuitable to protect an Issuer key K_{ISS}.

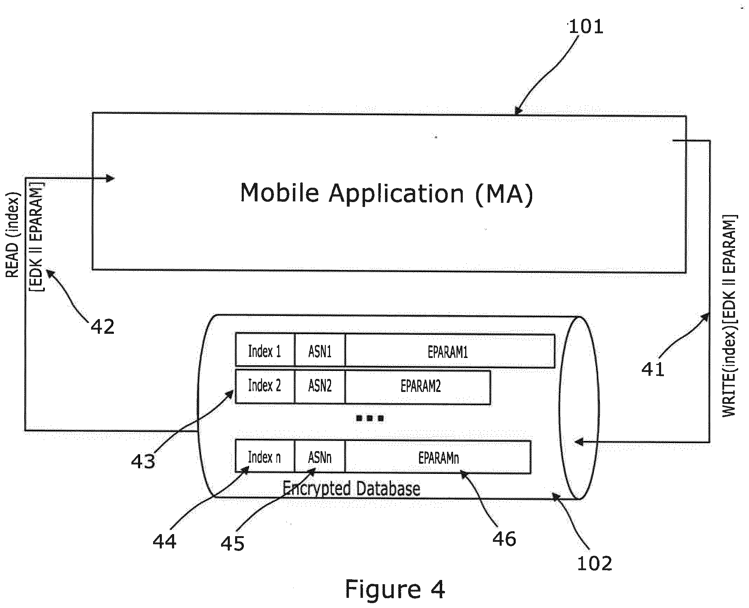

The general structure of mobile application 101 and encrypted local database 102 used in embodiments of the invention is shown in Figure 4. Mobile application 101 is used for transactions with another party - it is particularly appropriate for use in a payment device for making contactless transactions under the EMV contactless protocols as referenced above. The mobile application 101 is adapted to write to (41) and read from (42) the encrypted local database 102. The encrypted local database 102 may contain any parameter needed for the operation of the mobile application 101 that is potentially sensitive to the user or any other party, such as a card issuer or a merchant.

In the embodiment shown, each entry 43 in the encrypted local database 102 has three items: an index 44; an application sequence counter value 45; and an encrypted parameter 46. The length of entries 43 is variable. The index 44 fixes the position in the encrypted local database 102 where one specific parameter is stored. The application sequence counter (represented pictorially as ASN) value 45 provides a reference to the transaction during which a relevant operation (resulting in, typically, writing of the parameter to the database) was performed. The encrypted parameter (EPARAM) 46 contains encrypted content in an appropriate format (such as TLV) for long term protection.

The inventors have determined that using this approach, it is possible for the mobile transaction application 101 to be a generic application that is not initially differentiated for each user. This means that the application can be downloaded by the user from an application store and installed in main memory in the same manner as a normal mobile application, so the user experience in installation is familiar. This means that any initialization by a user must occur on or after installation of the mobile application 101 on the mobile computing device. This immediately requires a different model of trust from that used in a conventional black-box model, because in this model the device key K_{D} is personalised to the device by the key issuer and provisioned to the secure element under key issuer control.

The mobile application 101 and the encrypted local database 102 must be resistant to both passive and active attacks, as they exist in an unprotected operation environment. Protection against static attacks is provided by white-box cryptographic techniques and (if a grey-box approach is used) by software obfuscation. Protection against active attacks such as code and data lifting is also needed. In such attacks, an attacker attempts to get access to the encrypted database items from a targeted mobile device, copies them, and bring them for execution in its own mobile execution environment, using the same mobile application 101 - which is generic and not customized for an individual user - in order to implement the same cryptographic processes using the same system keys. More detailed discussion of how active attacks are addressed is provided below in relation to specific embodiments of the invention.

The system may be constructed such that the encrypted parameters 46 in the encrypted local database 102 have confidentiality (they can only be read by the mobile application 101 and integrity (they can only be modified by the mobile application 101). Confidentiality and integrity may be provided with the same mechanisms, as will be discussed below. These parameters may be used by the mobile application 101 for any or all of general processing, as key material for cryptographic primitives, or specifically as key material for cryptographic primitives using a WBC model (in which it is assumed that an attacker has full access to the mobile application 101).

As indicated above, the mobile application 101 is generic and may be downloaded from an application store. In different embodiments, the mobile application may be initializable or not initializable before it begins its operational lifetime. Embodiments of each are described below - where initialisation is possible, the user may create cryptographic keys specific to the user and/or to the mobile computing device.

As has been indicated above, in embodiments of the invention white-box cryptographic techniques are used for the mobile application 101. To provide further protection, grey-box techniques may also be used in embodiments of the invention. Where only a white-box approach is used, an attacker has unlimited access to the encrypted local database 102 and to the application logic of the mobile application 101, but where a grey-box approach is used the application logic at least is protected using additional techniques such as software obfuscation. To enhance security, embodiments using a grey-box approach are presently preferred.

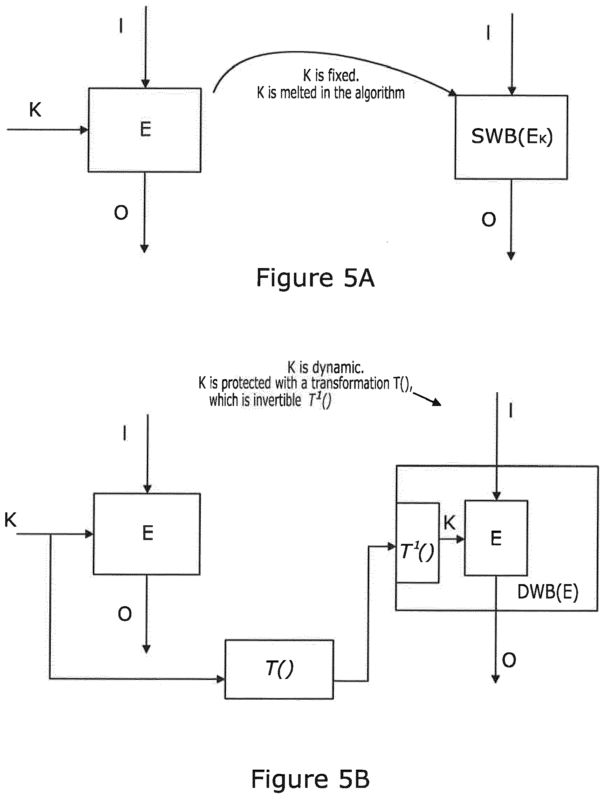

Embodiments of the invention will be described further below using static white-box (SWB) and dynamic white-box (DWB) cryptographic techniques. The conceptual difference between these two approaches will now be described with reference to Figures 5A and 5B.

Figure 5A shows an SWB implementation in which a secret key K is fixed, but is "melted" in to the block cipher structure so that it cannot be reverse engineered by an attacker. It becomes integral to the implementation on compilation of the mobile application 101.

Figure 5B shows a DWB implementation in which the key K may change on every call to the mobile application 101. In such an implementation the dynamic key K is passed as a parameter, but it is firstly securely transformed before being transmitted through the unprotected environment. There are two possible transformation types:
- Un-keyed t transformations *o(K)*, wherein the security relies on the secrecy of the transformation itself - o(K) may be considered to be an obfuscation function. This may be implemented as an obfuscation transformation with a secret encoding/decoding table. Thus *o⁻¹(K)* is the inverse obfuscation transformation that allows the recovery of the session key at destination, after passing the unsecure environment. This approach is particularly suitable when it will not be practical for there to be any initialization stage for a downloaded mobile transaction application.
- Encryption with a general purpose encryption/decryption algorithm e_{R} (K). The generated implementation uses a key *R*, which is unique per user/mobile device, that is used to encrypt the dynamic key K after its generation and to decrypt it internally to the DWB(E) primitive to be used by the encryption algorithm E.

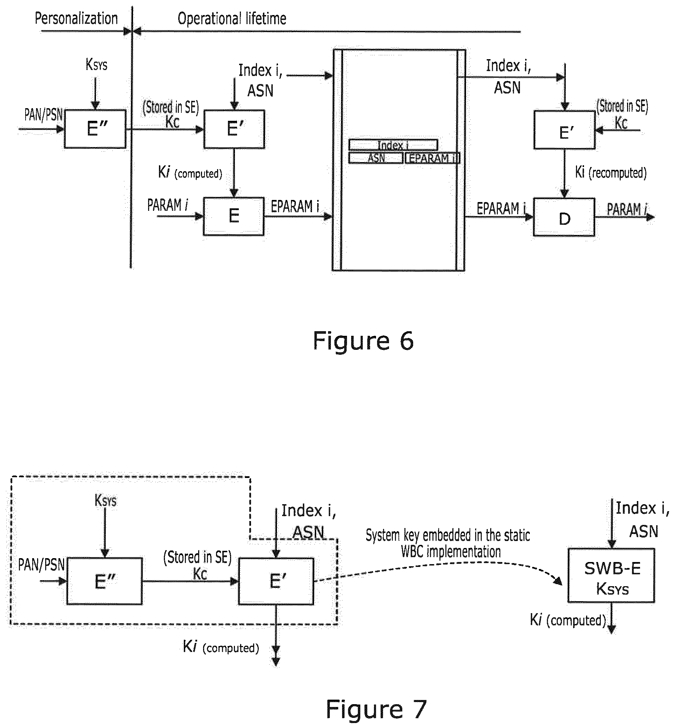

A static white-box implementation of an embodiment of the invention will now be described with reference to Figures 7 to 9, and also Figure 5A described above.

First of all, it should be noted that care is needed to protect against passive attacks on cryptographic primitives when a generic mobile transaction application is used. The issuer cannot set a master key per card K_{D}, since this would require a mobile transaction application per user. In prior art arrangements using a secure element, a device key K_{D} is usually computed from the issuer's master key K_{ISS} in the user's secure premises derived in part from user information (such as a user's Primary Account Number (PAN).

For a generic mobile transaction application, the master key K_{ISS} must be embedded securely in the mobile transaction application. The mobile transaction application will then compute the equivalent of a K_{D} on each run. The static white-box (SWB) therefore needs to have K_{ISS} coded directly into its encryption algorithm (for example, an AES256 encryption algorithm).

A risk is that the attacker will attempt to obtain the embedded K_{ISS} from the mobile transaction application by attempting to cryptanalyze the white-box implementation itself. For current SWB implementations, this risk may be considered sufficiently great that it could be desirable to provide additional protection, though this may change for future SWB implementations. It may be desirable as a result to use in practice a grey-box implementation, in which the arrangement described below is protected further by software obfuscation. Specific software obfuscation techniques are not described further here, but the skilled person will without difficulty be able to identify appropriate software obfuscation resources from the existing technical literature. Grey-box obfuscation will therefore not be shown explicitly in the drawings, which will focus on the white-box implementation of the mobile transaction application and encrypted local database design.

Figure 6 indicates an "ideal" solution that would apply if the mobile transaction application was personalised at the issuer (as could be the case with a secure element, but not with a generic downloadable mobile transaction application). The master key K_{SYS} (equivalent to K_{ISS} used earlier) is used by the issuer to derive the user device key K_{C} (equivalent to K_{D} used earlier) in a personalization phase with user information such as the PAN used as a diversifier, with K_{SYS} never visible outside the issuer and with K_{D} saved in the permanent memory of, and so protected in, the secure element. The secure element can be set to an initialized "operational lifetime" stage before it ever reaches the user. A write operation can be performed in the following way, as shown in Figure 6.

In its operational lifetime the mobile transaction application performs a write operation at Index *i* as follows:
- The key K*ᵢ* is derived from the key K*_{C}* depending on the Index *i* in the database where the specific parameter PARAM*i* has its place and on the number of the current transaction performed by the application, namely the application sequence number (ASN).
- The parameter PARAM*i* to be set in the database is encrypted with the key K*ᵢ* to get the encrypted value EPARAM*i*.
- The Index *i*, the ASN, and the encrypted form of the parameter EPARAM*i* are set in the database.

In its operational lifetime the mobile transaction application performs a read operation at Index *i* as follows:
- The ASN and the encrypted form of the parameter EPARAM*i* are withdrawn from the database at the row entry identified by Index *i*.
- The Index *i* and the ASN retrieved from the database are used to derive the key K*ᵢ*. The key K*ᵢ* is derived from the key K*_{C}* depending on the Index*i* in the database where the specific parameter EPARAM*i* has its place and on the number of the transaction when the writing was performed by the application, namely the then ASN (and not the current ASN).
- The key K*ₗ* is used to decrypt the encrypted parameter EPARAM*i* as stored in the database and retrieve its original value PARAM*i*.

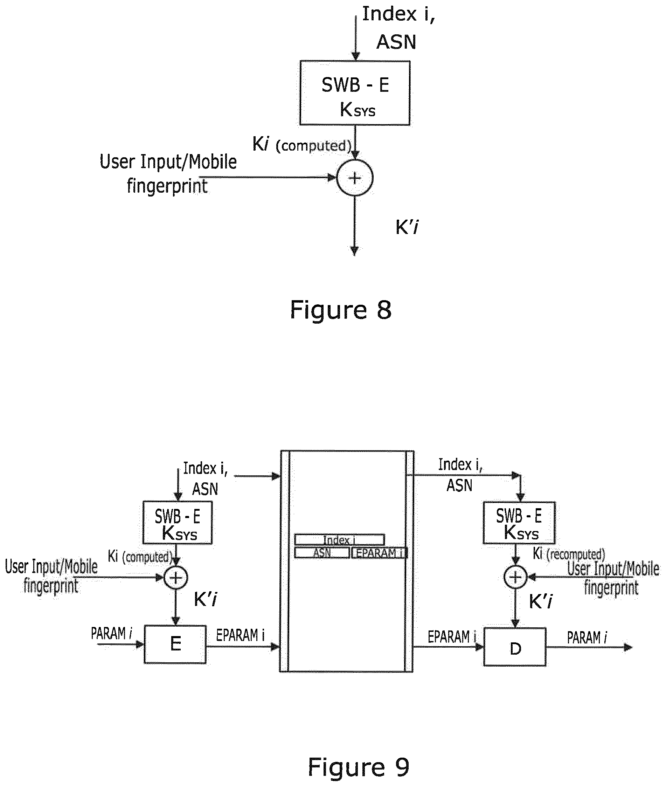

As these "ideal conditions" do not apply in the white-box regime, the design is modified by transformation. Figure 7 shows a first transform used to protect against a passive attack. This shows that the separate steps of deriving K_{C} from K_{SYS} and Ki from K_{C} are merged together into an appropriate static white-box algorithm, as shown, with K_{SYS}. Several suitable cryptographic algorithms may be used for this purpose, such as AES-256. Figure 8 shows a second transform used to protect against an active code lifting attack. In this approach, user input or a mobile fingerprint is used as a further input to modify and therefore personalize Kᵢ.

Figure 9 illustrates the adaption of the "ideal" security protocol used in a secure element case to the static white-box cryptographic case used in an embodiment of the invention - this can be used to provide the transformations needed in the overall structure of mobile transaction application and encrypted local database shown in Figure 4. A write operation is shown on the left-hand side of the diagram - an index I and an ASN value are inputs to the static white-box algorithm which uses an embedded K_{SYS} to create a key Kᵢ for that index value, which is then personalised to the user or mobile device by combination with user input or the mobile fingerprint to form K'ᵢ. K'ᵢ is used to encrypt the parameter PARAMᵢ to form encrypted parameter EPARAMᵢ, which is then stored under that index i.

The read operation is the inverse of the write procedure, and is shown on the right-hand side of the diagram. K'ᵢ is recomputed using the same procedure as originally used to create it. K'ᵢ is then used to decrypt EPARAMᵢ to recreate PARAMᵢ.

All the procedures of Figure 9 may be further protected by software obfuscation - that is, this whole process may take place in a "grey box".

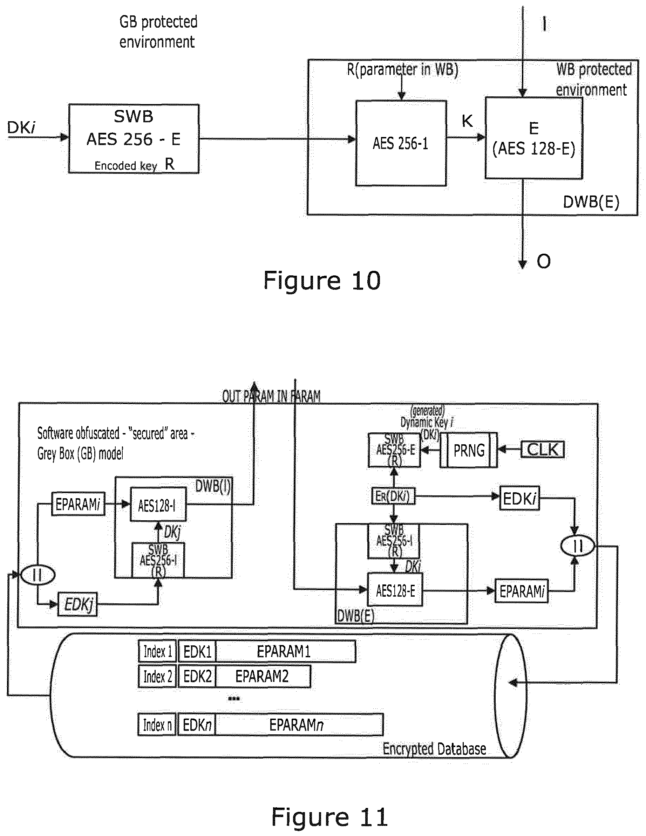

The approach of Figure 9 assumes that there is no user customisation of the mobile transaction application - user input or the mobile fingerprint is provided as the mobile transaction application, which is entirely generic, runs. User customisation on initialisation can be used in connection with a dynamic white-box cryptographic approach. An embodiment of the invention using such an approach is described with reference to Figures 10 and 11, and also Figure 5B described above.

In this model security of the encrypted local database is based on a locally random generated key DKᵢ - this is a significant difference from the SWB embodiment described above. There is no reliance on a key hierarchy from K_{SYS}. Moreover, the exposure to potential attack for DKᵢ is very brief - all other keys are transported in encrypted form and encryption and decryption operations are carried out according to a white-box approach. This arrangement provides protection against active attacks without need for continued user intervention beyond the initialization procedure, which is again a difference from the SWB embodiment where protection against active attacks is made by the use of the user input or mobile fingerprint during the write and read operations.

The main construct used by the embodiment is shown in Figure 10 - this is an implantation of the approach shown in Figure 5B, where the transformation is implemented as encryption or decryption with key R.

As for the previous embodiment, it is preferred that this whole process takes place in a grey-box environment. The encryption algorithm implemented for the transformation in the grey box environment may for example be SWB AES 256-E with the key R encoded in its structure. The decryption algorithm implemented in the dynamic white-box construct may be a parameterized AES 256-I algorithm with the key R set as a parameter in the WB protected environment of the DWB construct.

During an initialization stage performed by the user, a generic mobile transaction application downloaded from an application store may have a system key K_{SYS} for SWB AES 256 E replaced with a device or user specific key R. It is possible that the same generic application could be used to achieve an SWB or DWB implementation dependent on whether user initialization takes place, or is supported by the mobile computing device. After the change of key to R, an attacker will no longer be able to make an effective code or data lifting attack even if grey box protection is circumvented, as the attacker will not be able to replicate the relevant processes on his or her own hardware because key R will not be available.

There is no equivalent in this model to the use of Kᵢ as a parameter for the AES-128 E algorithm - this encryption block is now user or device specific and is generated as a dynamic WB implementation with the random key R generated during the initialization process used as a transport key. This eliminates one risk associated with the previous embodiment. The grey box only needs to protect the operational key DK*i* from the moment it is generated until the moment is encrypted with the transportation key *R*.

The basic principle of operation is that the mobile transaction application is instantiated with a random key *R* only at the time the initialization procedure is called. This key will be used as a transport key in the hostile environment to carry over the operational key DKi in an encrypted form from its generation till its use for encryption/decryption of the IN PARAM to EPARAM and of EPARAM to OUT PARAM. The dynamic white-box implementation then performs a decryption operation by using the transport key *R* to obtain the key DK*i* in such a way that no information on this key is exposed outside the white-box implemented sandbox.

The initialization sequence consists of the following exemplificative calls of the crypto API for the encryption (similar sequences are needed for obtaining the decryption functions):

**Table 1**

| |
|---|
| • Create the SWBC encryption function: |
| *S_encrypt_WBC* (input, size), where *input* is the key to be transported and size its byte length |
| for the transport of the DK*i*, using the user/device specific transport key *tk* as a static key embedded in a WBC mode in the AES256. |
| This function is created by the API call like: |
| *Create Static WBC*(encrypt, *tk,* S_encrypt_WBC, AES256) |
| |
| • Create the DWBC encryption function: |
| *D_encrypt_WBC*(ekey*,* input, size), where *ekey* is the encrypted form of the *DKi* key using the transport key *tk, input* is the parameter to be AES 128 protected in DBE and size is its byte length. |
| This function is created by an API call like: |
| *Create Dynamic WBC* (encrypt, tk, D_encrypt_WB, AES 128). |
| • DK*i* = Random(16); /* generates the key operation key DK*i* of 16 bytes* / |
| • Ekey = S_encrypt_WBC(DKi,16); /* create the transportation key Ekey*/ |
| • EDATA = D_encrypt_WBC(Ekey, DATA, n* 16) |

An exemplary initialization sequence is shown above in Table 1. Only encryption functions are shown - the same principles are applied for decryption functions, and can be determined by the skilled person in a routine manner.

The overall design of this embodiment in its operational lifetime state is shown in Figure 11. While generally similar to the arrangement shown in Figure 4, it has certain differences which will be discussed below.

The dynamic key is generated from a clock function CLK and a programmable random number generator PRNG to provide a random seed to the static white-box cryptographic generator for key DKᵢ, which is then encrypted to form EDKᵢ and used as input to the dynamic white-box construct DWB(E) which encrypts the parameter to form EPARAMᵢ. EDKᵢ and EPARAMᵢ are together transported to the encrypted database under index i.

In its operational lifetime, the mobile transaction application performs the following calls for the encryption of the parameter INPARAM of n * 16 bytes:
- DKi = Random(16); /* generates the key operation key DKi of 16 bytes*/
- Ekey = S_encrypt_WB(R,16); /* create the transportation key Ekey*/
- EPARAM = D_encrypt_WB(Ekey, IN PARAM, n*16)

As can be seen from Figure 11, the structure of the encrypted database is slightly different from that of the SWB embodiment described above. Each entry in the database may again be of variable length, but the required items for each entry are now as follows:
- Index - Fix position in the DBE where one specific parameter is stored
- EDK - The cryptogram under the user/mobile specific key R of the key DKi used for the encryption of the content.
- EPARAM -- encrypted content of variable length (e.g., in TLV format) to be protected long term.

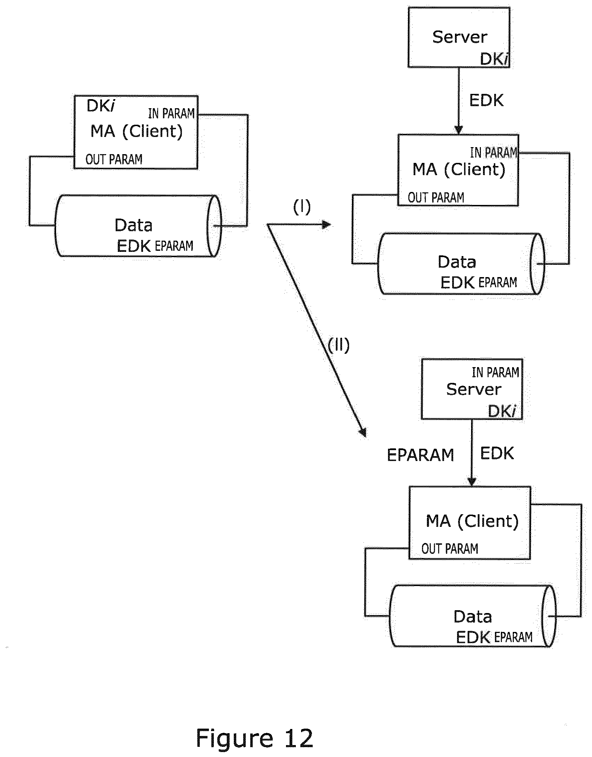

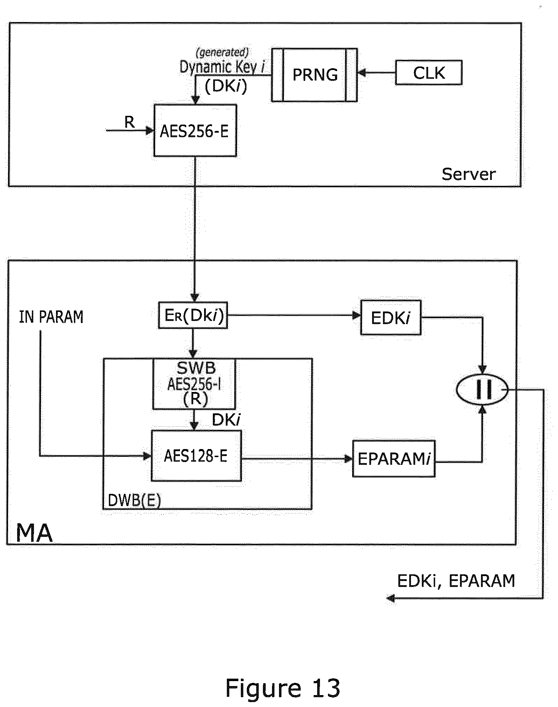

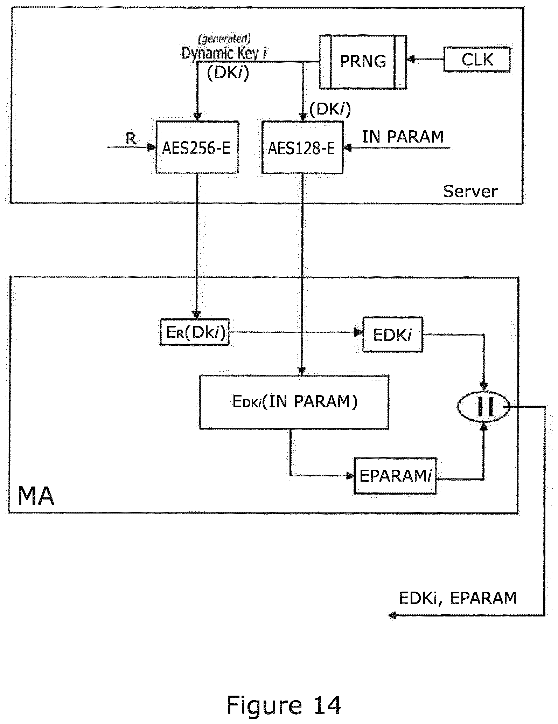

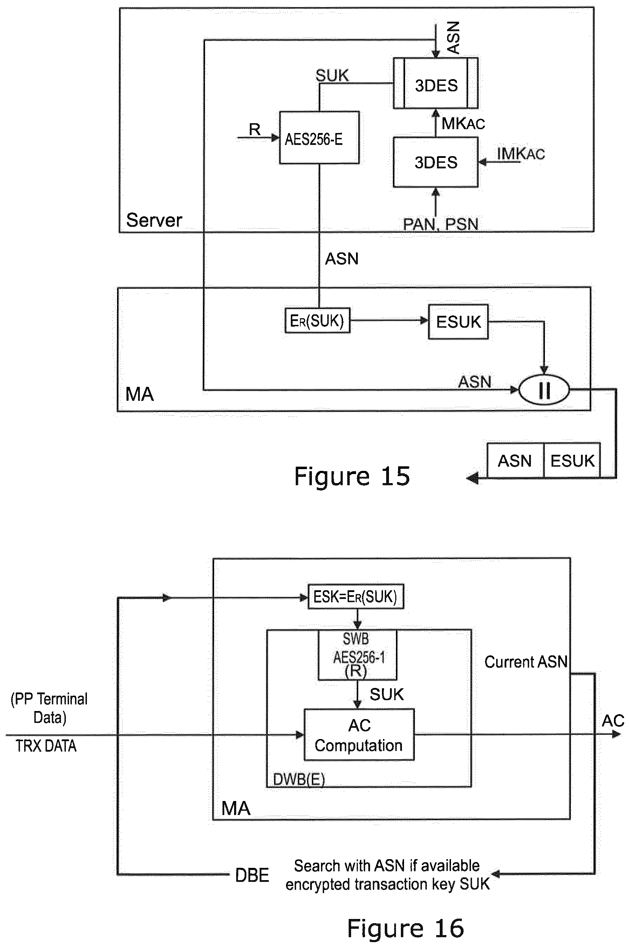

Further modifications to this approach can be made to provide greater security by using a server supported process. One point of vulnerability is that the grey-box model is used to protect the operation key DKᵢ and also IN PARAM and OUT PARAM. Figure 12 shows two alternative approaches to addressing this point of vulnerability by using server support. These models will be described in greater detail with respect to Figures 13 and 14, with a further server supported model being described with reference to Figures 15 and 16.

Figure 13 illustrates a first server supported model in which one of the grey box operations - the generation of the operational key DKi - is secured by a remote server. This remote server may be considered as a protected execution environment providing a higher level of security than the grey box provided by software obfuscation in the main execution environment of the mobile computing device. In this approach, it is the server which executes the AES 256 E mechanism with the user key R as parameter - only the EDK*i* is sent to the mobile transaction application. The dynamic white-box construct uses DK*i* as the operation key for encryption of IN PARAM and its writing as EPARAM exactly as shown in Figure 11.

Figure 14 illustrates a second server supported model in which the server secures not only the operation key DK*i* but also the parameter itself. IN PARAM is also provided at the server side, and only the encrypted versions of DK*i* and IN PARAM are sent to the mobile transaction application for saving in the encrypted database.

Figures 13 and 14 both show only writing to the encrypted database. The skilled person will appreciate that the read operation is converse to the write operation in the manner described above for earlier embodiments.

Figure 15 illustrates a different server supported approach. In this approach, a single use key (SUK) is produced by the server and stored in the encrypted database ready for use by the mobile transaction application as an operation key for securing a payment transaction.

In this approach, the server implements a session key derivation algorithm using the application sequence counter ASN as an input. The server has already used identifying features of the user or mobile computing device (such as the PAN and/or the PSN of the associated user account) to create a card master key MK_{AC} from the Issuer Master Key for AC computation. MK_{AC} is used to compute the SUK with respect to the ASN for which the key will be used in the mobile transaction application. This SUK is then encrypted with the user transport key R as ESUK = E_{R}(SUK), and is sent together with the ASN to the mobile transaction application for storage in the encrypted local database.

Figure 16 illustrates how the mobile transaction application uses records containing an encrypted SUK to perform a payment transaction.

The mobile transaction application uses a current ASN value to search the local database for the existence of an encrypted SUK. If such a key exists in encrypted form ESUK = E_{R}(SUK), the local database will provide it to the mobile transaction application.

The mobile transaction application will use this recovered encrypted key in the DWB(E) mechanism firstly to recover the SUK, by applying the transformation mechanism SWB AES256-I with key R to decrypt ESUK. SUK can then be used to compute the payment proof AC (application cryptogram) used under the EMV standard (for example) on transaction data received from a terminal.

The embodiments of a mobile transaction application described above generally relate to payment, and are particularly useful for a mobile computing device such as a mobile telephone implementing contactless card protocols to allow the mobile computing device to operate as a payment device. This is, however, not the only operational context available. In addition to use in payment protocols other than contactless card transactions, embodiments of the invention can be used outside the context of payment - for example, embodiments may be used to provide a travel application for safe management of electronic tickets used to interact with a ticket gating system of a transport network. Individual transactions in this case are the interactions between the travel application and the individual gates of the ticket gating system, and use of approaches as described here prevents the acquisition and cloning of electronic tickets or other travel permissions.

## Claims

1. A mobile computing device having a processor and a memory, wherein the processor is programmed with a mobile transaction application (101), wherein:
the memory comprises a local database (102) to hold data items for use by the mobile transaction application (101), wherein an entry (43) in the local database comprises an index (44), an encrypted parameter (46) for use by the mobile transaction application (101), and an additional parameter (45) associated with the encryption/decryption step for the encrypted parameter for that entry;
wherein the mobile transaction application (101) is adapted to encrypt data items for storage in the local database (102) and to decrypt data items stored in the local database (102) using white-box cryptographic techniques.

2. A mobile computing device as claimed in claim 1, wherein the mobile transaction application is adapted to use static white-box cryptography and uses a key derivation algorithm in encryption and storage of data in the local encrypted database.

3. A mobile computing device as claimed in claim 2, wherein the additional parameter in the entry is an application sequence counter to indicate a transaction in which an operation associated with the entry was performed.

4. A mobile computing device as claimed in claim 1 , wherein the mobile transaction application is adapted to use dynamic white-box cryptography and uses a key transportation algorithm in encryption and storage of data in the local encrypted database.

5. A mobile computing device as claimed in claim 4, wherein the additional parameter in the entry is an encrypted key for that entry.

6. A mobile computing device as claimed in claim 4 or claim 5, wherein the mobile transaction application communicates with a server adapted to secure one or more parameters used by the mobile transaction application.

7. A mobile computing device as claimed in any preceding claim, wherein the mobile transaction application is downloaded to the mobile computing device without customisation to the mobile computing device or its user, and wherein on installation or initialization, the mobile transaction application is customised to the mobile computing device or its user.

8. A mobile computing device as claimed in any preceding claim, wherein the mobile computing device is adapted to act as a payment device and wherein the mobile transaction application is a payment application.

9. A mobile computing device as claimed in claim 8 wherein the mobile computing device is adapted to emulate a contactless payment card.

10. A method of operating a mobile transaction application (101) at a mobile computing device, wherein the mobile computing device comprises a processor adapted to execute the mobile transaction application (101) and a memory comprising a local database (102) to hold data items for use by the mobile transaction application (101), the method comprising:
identifying one or more data items for storage in or retrieval from the local database (102); and either
encrypt the one or more data items for storage in the local database (102) using white-box cryptographic techniques, or
decrypt the one or more data items stored in the local database (102) using white-box cryptographic techniques;
wherein an entry (43) in the local database (102) comprises an index (44), an encrypted parameter (46) for use by the mobile transaction application (101), and an additional parameter (45) associated with the encryption/decryption step for the encrypted parameter for that entry.

11. The method of claim 10, wherein the mobile transaction application uses static white-box cryptography and uses a key derivation algorithm in encryption and storage of data in the local encrypted database.

12. The method of claim 10, wherein the mobile transaction application uses dynamic white-box cryptography and uses a key transportation algorithm in encryption and storage of data in the local encrypted database.

13. The method of any of claims 10 to 12, further comprising:
downloading the mobile transaction application to the mobile computing device without customisation to the mobile computing device or its user; and
on installation or initialization, customising the mobile transaction application to the mobile computing device or its user.

14. The method of any of claims 10 to 13, wherein the mobile computing device is adapted to act as a payment device and wherein the mobile transaction application is a payment application.

15. The method of claim 14, wherein the mobile computing device is adapted to emulate a contactless payment card.

## Patentansprüche

1. Mobiles Datenverarbeitungsgerät, das einen Prozessor und einen Speicher aufweist, wobei der Prozessor mit einer Mobiltransaktionsanwendung (101) programmiert ist, wobei:
der Speicher eine lokale Datenbank (102) umfasst, um Datenelemente zur Verwendung durch die Mobiltransaktionsanwendung (101) zu enthalten, wobei ein Eintrag (43) in der lokalen Datenbank einen Index (44), einen verschlüsselten Parameter (46) zur Verwendung durch die Mobiltransaktionsanwendung (101) und einen zusätzlichen Parameter (45), der mit dem Verschlüsselungs-/Entschlüsselungsschritt für den verschlüsselten Parameter für diesen Eintrag verknüpft ist, umfasst,
wobei die Mobiltransaktionsanwendung (101) dafür eingerichtet ist, unter Verwendung von kryptographischen White-Box-Techniken Datenelemente zum Speichern in der lokalen Datenbank (102) zu verschlüsseln und in der lokalen Datenbank (102) gespeicherte Datenelemente zu entschlüsseln.

2. Mobiles Datenverarbeitungsgerät nach Anspruch 1, wobei die Mobiltransaktionsanwendung dafür eingerichtet ist, statische White-Box-Kryptographie zu verwenden, und einen Schlüsselableitungsalgorithmus beim Verschlüsseln und beim Speichern von Daten in der lokalen verschlüsselten Datenbank verwendet.

3. Mobiles Datenverarbeitungsgerät nach Anspruch 2, wobei der zusätzliche Parameter in dem Eintrag ein Anwendungssequenzzähler ist, um eine Transaktion anzugeben, bei der eine mit dem Eintrag verknüpfte Operation durchgeführt wurde.

4. Mobiles Datenverarbeitungsgerät nach Anspruch 1, wobei die Mobiltransaktionsanwendung dafür eingerichtet ist, dynamische White-Box-Kryptographie zu verwenden, und einen Schlüsseltransportalgorithmus beim Verschlüsseln und beim Speichern von Daten in der lokalen verschlüsselten Datenbank verwendet.

5. Mobiles Datenverarbeitungsgerät nach Anspruch 4, wobei der zusätzliche Parameter in dem Eintrag ein verschlüsselter Schlüssel für diesen Eintrag ist.

6. Mobiles Datenverarbeitungsgerät nach Anspruch 4 oder Anspruch 5, wobei die Mobiltransaktionsanwendung mit einem Server kommuniziert, der dafür eingerichtet ist, einen oder mehrere Parameter zu sichern, die durch die Mobiltransaktionsanwendung verwendet werden.

7. Mobiles Datenverarbeitungsgerät nach einem der vorhergehenden Ansprüche, wobei die Mobiltransaktionsanwendung ohne Anpassung an das mobile Datenverarbeitungsgerät oder seinen Benutzer auf das mobile Datenverarbeitungsgerät heruntergeladen wird und wobei, beim Installatieren oder beim Initialisieren, die Mobiltransaktionsanwendung an das mobile Datenverarbeitungsgerät oder seinen Benutzer angepasst wird.

8. Mobiles Datenverarbeitungsgerät nach einem der vorhergehenden Ansprüche, wobei das mobile Datenverarbeitungsgerät eingerichtet ist, als ein Zahlungsgerät zu agieren, und wobei die Mobiltransaktionsanwendung eine Zahlungsanwendung ist.

9. Mobiles Datenverarbeitungsgerät nach Anspruch 8, wobei das mobile Datenverarbeitungsgerät eingerichtet ist, eine berührungslose Zahlungskarte zu emulieren.

10. Verfahren zum Betreiben einer Mobiltransaktionsanwendung (101) auf einem mobilen Datenverarbeitungsgerät, wobei das mobile Datenverarbeitungsgerät einen Prozessor, der dafür eingerichtet ist, die Mobiltransaktionsanwendung (101) auszuführen, und einen Speicher, der eine lokale Datenbank (102) umfasst, um Datenelemente zur Verwendung durch die Mobiltransaktionsanwendung (101) zu enthalten, umfasst, wobei das Verfahren Folgendes umfasst:
Identifizieren eines oder mehrerer Datenelemente zum Speichern in oder Abrufen von der lokalen Datenbank (102); und entweder
Verschlüsseln des einen oder der mehreren Datenelemente zum Speichern in der lokalen Datenbank (102) unter Verwendung von kryptographischen White-Box-Techniken oder
Entschlüsseln des einen oder der mehreren in der lokalen Datenbank (102) gespeicherten Datenelemente unter Verwendung von kryptographischen White-Box-Techniken,
wobei ein Eintrag (43) in der lokalen Datenbank (102) einen Index (44), einen verschlüsselten Parameter (46) zur Verwendung durch die Mobiltransaktionsanwendung (101) und einen zusätzlichen Parameter (45), der mit dem Verschlüsselungs-/Entschlüsselungsschritt für den verschlüsselten Parameter für diesen Eintrag verknüpft ist, umfasst.

11. Verfahren nach Anspruch 10, wobei die Mobiltransaktionsanwendung statische White-Box-Kryptographie verwendet und einen Schlüsselableitungsalgorithmus beim Verschlüsseln und beim Speichern von Daten in der lokalen verschlüsselten Datenbank verwendet.

12. Verfahren nach Anspruch 10, wobei die Mobiltransaktionsanwendung dynamische White-Box-Kryptographie verwendet und einen Schlüsseltransportalgorithmus beim Verschlüsseln und beim Speichern von Daten in der lokalen verschlüsselten Datenbank verwendet.

13. Verfahren nach einem der Ansprüche 10 bis 12, das ferner Folgendes umfasst:
Herunterladen der Mobiltransaktionsanwendung ohne Anpassung an das mobile Datenverarbeitungsgerät oder seinen Benutzer auf das mobile Datenverarbeitungsgerät; und
beim Installatieren oder beim Initialisieren, Anpassen der Mobiltransaktionsanwendung an das mobile Datenverarbeitungsgerät oder seinen Benutzer.

14. Verfahren nach einem der Ansprüche 10 bis 13, wobei das mobile Datenverarbeitungsgerät dafür eingerichtet ist, als ein Zahlungsgerät zu agieren, und wobei die Mobiltransaktionsanwendung eine Zahlungsanwendung ist.

15. Verfahren nach Anspruch 14, wobei das mobile Datenverarbeitungsgerät dafür eingerichtet ist, eine berührungslose Zahlungskarte zu emulieren.

## Revendications

1. Dispositif informatique mobile comportant un processeur et une mémoire, dans lequel le processeur est programmé avec une application de transaction mobile (101), dans lequel :
la mémoire comprend une base de données locale (102) pour contenir des éléments de données à utiliser par l'application de transaction mobile (101), dans lequel une entrée (43) dans la base de données locale comprend un indice (44), un paramètre chiffré (46) à utiliser par l'application de transaction mobile (101), et un paramètre additionnel (45) associé à l'étape de chiffrement/déchiffrement pour le paramètre chiffré pour cette entrée ;
dans lequel l'application de transaction mobile (101) est adaptée pour chiffrer des éléments de données pour stockage dans la base de données locale (102) et pour déchiffrer des éléments de données stockés dans la base de données locale (102) à l'aide de techniques cryptographiques en boîte blanche.

2. Dispositif informatique mobile selon la revendication 1, dans lequel l'application de transaction mobile est adaptée pour utiliser une cryptographie en boîte blanche statique et utilise un algorithme de dérivation de clé en chiffrement et stockage de données dans la base de données chiffrée locale.

3. Dispositif informatique mobile selon la revendication 2, dans lequel le paramètre additionnel dans l'entrée est un compteur de séquence d'application pour indiquer une transaction dans laquelle une opération associée à l'entrée a été réalisée.

4. Dispositif informatique mobile selon la revendication 1, dans lequel l'application de transaction mobile est adaptée pour utiliser une cryptographie en boîte blanche dynamique et utilise un algorithme de transport de clé en chiffrement et stockage de données dans la base de données chiffrée locale.

5. Dispositif informatique mobile selon la revendication 4, dans lequel le paramètre additionnel dans l'entrée est une clé chiffrée pour cette entrée.

6. Dispositif informatique mobile selon la revendication 4 ou la revendication 5, dans lequel l'application de transaction mobile communique avec un serveur adapté pour sécuriser un ou plusieurs paramètres utilisés par l'application de transaction mobile.

7. Dispositif informatique mobile selon l'une quelconque des revendications précédentes, dans lequel l'application de transaction mobile est téléchargée vers le dispositif informatique mobile sans personnalisation sur le dispositif informatique mobile ou à son utilisateur, et dans lequel lors d'une installation ou d'une initialisation, l'application de transaction mobile est personnalisée sur le dispositif informatique mobile ou à son utilisateur.

8. Dispositif informatique mobile selon l'une quelconque des revendications précédentes, dans lequel le dispositif informatique mobile est adapté pour agir comme un dispositif de paiement et dans lequel l'application de transaction mobile est une application de paiement.

9. Dispositif informatique mobile selon la revendication 8, dans lequel le dispositif informatique mobile est adapté pour émuler une carte de paiement sans contact.

10. Procédé d'exploitation d'une application de transaction mobile (101) au niveau d'un dispositif informatique mobile, dans lequel le dispositif informatique mobile comprend un processeur adapté pour exécuter l'application de transaction mobile (101) et une mémoire comprenant une base de données locale (102) pour contenir des éléments de données à utiliser par l'application de transaction mobile (101), le procédé comprenant :
l'identification d'un ou de plusieurs éléments de données pour stockage dans ou récupération depuis la base de données locale (102) ; et soit
le chiffrement des un ou plusieurs éléments de données pour stockage dans la base de données locale (102) à l'aide de techniques cryptographiques en boîte blanche, soit
le déchiffrement des un ou plusieurs éléments de données stockés dans la base de données locale (102) à l'aide de techniques cryptographiques en boîte blanche ;
dans lequel une entrée (43) dans la base de données locale (102) comprend un indice (44), un paramètre chiffré (46) à utiliser par l'application de transaction mobile (101), et un paramètre additionnel (45) associé à l'étape de chiffrement/déchiffrement pour le paramètre chiffré pour cette entrée.

11. Procédé selon la revendication 10, dans lequel l'application de transaction mobile utilise une cryptographie en boîte blanche statique et utilise un algorithme de dérivation de clé en chiffrement et stockage de données dans la base de données chiffrée locale.

12. Procédé selon la revendication 10, dans lequel l'application de transaction mobile utilise une cryptographie en boîte blanche dynamique et utilise un algorithme de transport de clé en chiffrement et stockage de données dans la base de données chiffrée locale.

13. Procédé selon l'une quelconque des revendications 10 à 12, comprenant en outre :
le téléchargement de l'application de transaction mobile vers le dispositif informatique mobile sans personnalisation sur le dispositif informatique mobile ou à son utilisateur ; et
lors d'une installation ou d'une initialisation, la personnalisation de l'application de transaction mobile sur le dispositif informatique mobile ou à son utilisateur.

14. Procédé selon l'une quelconque des revendications 10 à 13, dans lequel le dispositif informatique mobile est adapté pour agir comme un dispositif de paiement et dans lequel l'application de transaction mobile est une application de paiement.

15. Procédé selon la revendication 14, dans lequel le dispositif informatique mobile est adapté pour émuler une carte de paiement sans contact.
